# EUROPEAN PATENT SPECIFICATION

(11) **EP 1 734 242 B1**
(45) Date of publication and mention of the grant of the patent: **11.04.2012**
(21) Application number: 05025027.3
(22) Date of filing: 16.11.2005
(51) Int. Cl.: F02D 41/14, F01N 11/00

(54) **Diagnostic method for a post-cat lambda sensor and a catalyst of an exhaust system**
Diagnoseverfahren für eine Vorkatlambdasonde und ein Katalysator eines Abgassystems
Mèthode de diagnostic d'une sonde lambda disposeé en amont du pot catalytique et d'un pot catalytique d'une système d'échappement

(30) Priority: 17.06.2005 EP 05013126
(43) Date of publication of application: 20.12.2006
(73) Proprietor: Volvo Car Corporation, 405 31 Göteborg (SE)
(72) Inventor: Karlflo, Mats, 44350 Lerum (SE); Svenske, Erik, 41272 Göteborg (SE); Lundén, Marcus, 43361 Sävedalen (SE); Cardell, Eric, 41257 Göteborg (SE)
(74) Representative: VALEA AB

(56) References cited:
- EP-A- 1 422 398
- EP-A- 1 464 816
- EP-A- 1 471 238
- US-A- 5 749 222
- US-A1- 2005 056 266
- US-A1- 2005 072 410

## Description

### TECHNICAL FIELD

The present invention relates to a method for simultaneously diagnosing a primary lambda probe and a first catalyst in an exhaust aftertreament system, wherein the primary lambda probe is mounted upstream of the first catalyst.

### BACKGROUND OF THE INVENTION

In modem vehicles, catalytic converters are used to treat the exhaust gases from the engine.

For controlling the air/fuel mixture in an internal combustion engine, it is known to provide a primary probe upstream of a first catalyst in the catalytic converter, and a secondary probe downstream of said first catalyst. The probes measure the air to fuel ratio in their surroundings, and are often referred to as "lambda" probes. Likewise, an air to fuel ratio is referred to as a "lambda". As usual in the art, lambda =1.0 indicates stoichiometric combustion conditions, where 14.2 parts air correspond to one part fuel. Lambda being >1 indicates that the air/fuel mixture includes an excess amount of air, which is referred to as a "lean" mixture. Lambda being <1 indicates that the air/fuel mixture includes an excess amount of fuel, which is referred to as a "rich" mixture.

The primary lambda probe is usually used for measuring the lambda of the air/fuel mixture entering a first catalyst. The secondary lambda probe measures the lambda downstream of the first catalyst, and may be used to indicate that the desired lambda upstream of the first catalyst should be varied for optimal function of the catalytic converter.

During normal engine operation, the air/fuel mixture that reaches the catalytic converter will vary about lambda=1. To ensure that the exhaust gases are convertible by the catalysts, the variation about lambda =1 may be regulated so as to vary in a controlled manner. There are several known techniques for performing this regulation. In accordance with one prior art technique, the air/fuel mixture from the engine is varied from "rich" to "lean" and vice versa periodically with a fixed time period set. In accordance with another prior art technique, the response from the secondary lambda probe is used for deciding when the air/fuel mixture from the engine should be altered from "rich" to "lean" or vice versa.

Certain types of lambda probes may age or deteriorate such that their response to a change in surrounding lambda is altered. Two types of alterations may be involved. Firstly, there may be response delay, which means that the time needed for the probe to react to changes in surrounding lambda is increased. Secondly, the dynamic response of the probe may be altered, such that the probe may not reflect variations in surrounding lambda properly. Thus, the probe may have a slower dynamic response than a normal probe. The combined impact of the two types of faults may be referred to as "a slow response" problem, which may occur both for primary and for secondary lambda probes.

The function of catalytic converters is often evaluated based on their capacity for storing oxygen. Often, lambda probes are used for performing the evaluation of the oxygen storage capacity of a catalytic converter, Accordingly, a faulty lambda probe may lead to an incorrect evaluation of the catalytic converter. When well-functioning catalytic converters are classified as faulty, and thus replaced, this represents a considerable waste of material and is furthermore expensive, since a new catalytic converter must be provided. When instead a faulty catalytic converter is classified as correct, this might lead to insufficient exhaust gas conversion which is problematic for the environment.

Further, it is much more expensive to perform the replacement of a catalyst than of a lambda probe. The workshop replacement cost ratio for a catalyst versus a lambda probe may be between 5 and 50. Accordingly, unnecessary replacements of catalysts appreciably increase the overall costs for service of catalytic converter systems.

Thus, it is desirable to perform diagnosis of the function of the lambda probes per se, as well as of the catalyst.

US 2004/0221415 (Rösel et al) relates to a method for diagnosing an exhaust gas cleaning system of a lambda-controlled internal combustion engine where a catalyst is subjected to a specific oxygen load which is greater than the normal operating load, by increasing the surface covered by the oscillation of a signal of a pre-catalyst lambda probe according to a set value. The exhaust gas cleaning system can be tested by evaluating the oscillation of a signal of a post-catalyst lambda probe. In the event that the diagnosis shows a defect in the exhaust gas cleaning system without the area covered by the oscillation of the probe signal of the pre-catalyst lambda probe having had to be increased to or beyond a set value, the pre-catalyst lambda probe is defective. Otherwise it can be concluded that the catalyst is defective.

US 2004/0083720 (Nader et al.) describes a method for determining the effectiveness of a catalyst including measuring an upstream time history of a signal produced by an exhaust gas oxygen sensor upstream of the converter and a time history of an exhaust gas oxygen sensor disposed downstream of the converter. The time histories vary between a lean air-fuel ratio signal level and a rich air-fuel ratio signal level. A time delay is determined between the upstream time history and the downstream time history. The determined time delay is compared with a reference time delay to determine the efficiency of the converter. The converter is determined to be ineffective if the converter has been determined to be potentially ineffective and the time delay is determined to be less than the reference time delay.

Catalyst diagnosis methods will generally be affected by the function of both a primary lambda sensor, being located upstream of the catalyst, and a secondary lambda sensor, being located downstream of the catalyst. The sensors, as well as the catalyst, may deteriorate for example by the strains from heat, lubrication oil poisoning and fuel additive poisoning. Thus, an exhaust aftertreatment system which does not function properly might have its cause in a deteriorated catalyst, primary lambda sensor or secondary lambda sensor. Hence, it is desired to have a diagnosis method which may not only indicate a faulty exhaust aftertreatment system, but also identify the faulty component.

Further, it is desirable that a diagnosis for an aftertreatment system shall be reliable and performable under a satisfactory number of occasions during driving, such that any faults are detected as early as possible. Hence, a diagnosis method should preferably be able to run under driving conditions occurring frequently during normal driving.

US 2005/0072410 discloses diagnosing a pre-cat lambda sensor using a delay in an AFR signal. US 5 74 922 discloses diagnosing a catalyst using a delay in a post-cod AFR signal compared to a target AFR.

An object of the invention is therefore to provide an improved diagnosis method for an exhaust aftertreatment system in view of one or several of the above-mentioned aspects.

### SUMMARY OF THE INVENTION

In accordance with the invention, there is provided a method for diagnosing an exhaust aftertreatment system comprising at least one catalyst and a primary lambda probe mounted upstream of the catalyst,
including a diagnosis sequence for simultaneously diagnosing the primary lambda probe and the catalyst, said diagnosis sequence comprising
- controlling the target lambda (air to fuel ratio) upstream of the first catalyst so as to alter between a rich and lean value, respectively, at a target time
- measuring a primary lambda probe delay time being the time from the target time to the time at which the alteration of the target lambda is detected by the primary lambda probe, and
- measuring a catalyst pulse width time being the time from the target time to the time at which the alteration of the target lambda results in an alteration of the lambda detected downstream of the catalyst,
- evaluating the condition of the primary lambda probe using said delay time and
- evaluating the condition of the catalyst using said catalyst pulse width time.

Thus, the invention provides a possibility for performing simultaneous diagnosis of the primary lambda probe and the catalyst. This is advantageous since the condition of the primary lambda probe is of importance for the possibility of evaluating the condition of the catalyst. Further, it is desirable to define which component in the exhaust aftertreatment system is faulty, such that only the faulty component may be replaced in order to restore the system to the intended functionality. Also, simultaneous diagnosis of the primary lambda probe and the first catalyst enables the diagnosis of both components to be performed within a relatively short time period. This means that the diagnosis does not require long time periods of specific driving conditions in order to be performed, Instead, the relatively short duration of the diagnosis enables the diagnosis to be made relatively often during a drive, thus increasing the probability that any faults are detected as early as possible.

The proposed diagnosis method may be performed during idling, in which case the need for calibration is brought down to a minimum. Also, diagnosis during idling may be made as an "End of production line" control. Furthermore, universal test values may be obtained, which are comparable between different engine variants.

Further, as will be described later on, apart from the primary lambda probe and first catalyst diagnosis sequence, the method may include a sequence for diagnosing a secondary lambda probe mounted downstream of the catalyst.

Advantageously, a predetermined number of alterations of target lambda are performed so as to obtain a predetermined number of delay times and pulse width times for evaluation of the condition of the primary lambda probe and the first catalyst.
In this case, a mean of said predetermined number of delay times and pulse width times may be formed, said mean being compared to a predetermined threshold delay time and pulse width time for determining the condition of the first lambda probe/catalyst.

In an advantageous first embodiment, the method includes a primary lambda probe and first catalyst pre-diagnosis sequence comprising
- controlling the target lambda (air to fuel ratio) upstream of the catalyst so as to alter between a rich and lean state, respectively, at a target time
- measuring a primary lambda probe delay time being the time from said target time to the time at which the alteration of the lambda is detected by the primary lambda probe
- comparing the measured delay time with a pre-diagnosis threshold delay time
- if the measured delay time is less then the pre-diagnosis threshold delay time, classifying the primary lambda probe as well-functioning; and
- measuring a catalyst pulse width time being the time from said target time to the time at which the alteration of the target lambda results in an alteration of the lambda detected downstream of the catalyst during a pre-diagnosis threshold pulse width time,
- if said pre-diagnosis threshold pulse width time is expired before an alteration of the lambda downstream of the catalyst is detected, classifying the catalyst as well-functioning; and
- based on the classification of the primary lambda probe and catalyst, determining whether or not to perform a diagnosis sequence as described above for the primary lambda probe and the catalyst

Advantageously, the determination whether or not to perform a diagnosis sequence may be made as follows:
- if the primary lambda probe and catalyst pre-diagnosis sequence results in both the primary lambda probe and the catalyst being classified as well-functioning, no further diagnosis is performed;
- if the primary lambda probe is classified as well-functioning, and the catalyst is not classified as well-functioning, a diagnosis sequence is performed for the catalyst;
- if the primary lambda probe is not classified as well-functioning, and the catalyst is classified as well-functioning, a diagnosis sequence is performed for the primary lambda probe;
- if the primary lambda probe is not classified as well-functioning, and the catalyst is not classified as well-functioning, a diagnosis sequence is performed for the primary lambda probe and the catalyst.

In another embodiment, which may optionally be combined with the first embodiment, wherein the system comprises a secondary lambda probe being arranged downstream of the first catalyst, the method includes a diagnosis sequence for diagnosing the secondary lambda probe which is performed before, after or interrupting the primary lambda probe and first catalyst diagnosing sequence.

Advantageously, the secondary lambda probe diagnosis sequence comprises controlling the target lambda upstream of the catalyst so as to vary the lambda periodically at least partly in a nominal dynamic range of the secondary lambda probe,
- measuring the response of the secondary lambda probe to said periodical variation, and
- determining a condition measure of the secondary lambda probe using said response.

### BRIEF DESCRIPTION OF THE DRAWINGS

An exemplary embodiment of the invention will be described in the following, with reference to the accompanying drawings, in which:
Fig. 1 depicts schematically a catalytic converter system for an engine.
Fig. 2a depicts schematically the response curve of a binary type lambda probe.
Fig. 2b depicts schematically the response curve of a linear type lambda probe.
Fig. 3 illustrates schematically the response function of a probe as seen with reference to time.
Figs 4a and 4b illustrate schematically the response function of a well-functioning and of a faulty probe as seen with reference to frequency.
Figs 5a and 5b illustrate schematically the time delay and the pulse width as measured in the diagnosis sequence according to the invention.
Fig. 6 is a flowchart illustrating the shift between a pre-diagnosis sequence and a full diagnosis sequence in accordance with an embodiment of a method according to the invention.
Fig. 7 is a flowchart illustrating an embodiment of a full diagnosis sequence according to the invention.
Fig. 8 is a flowchart illustrating an embodiment of a secondary lambda probe diagnosis sequence suitable for use in combination with the diagnosis sequence and method.
Figs 9a to 9d illustrate examples of the variations in target lambda during different embodiments of a method according to the invention.
Fig. 10a illustrates schematically a possible response of a well-functioning secondary lambda probe during a secondary lambda probe diagnosis sequence as proposed herein.
Fig. 10b illustrates schematically a possible of a faulty secondary lambda probe during a secondary lambda probe diagnosis sequence as proposed herein.
Fig. 11 illustrates schematically the determination of a threshold value from the response of a diagnosed lambda probe.
Fig. 12 illustrates schematically the periodical variation of lambda according to an embodiment of the secondary lambda probe diagnosis sequence as described herein.

### DETAILED DESCRIPTION OF PREFERRED EMBODIMENTS

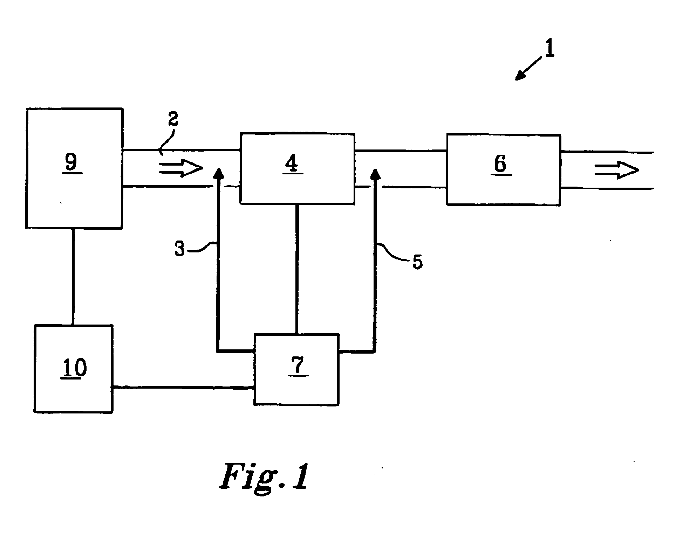

In Fig. 1, a catalytic converter system 1 for an engine is schematically illustrated. An engine, generally denoted by 9, produces exhaust gases that are brought via an exhaust pipe 2 to the catalytic converter system 1. The arrows in Fig. 1 illustrates the direction in which the exhaust gases travel, and the terms "upstream" and "downstream" are used with reference to this direction.

In the illustrated embodiment, the catalytic converter system 1 comprises a first catalyst 4 and a second catalyst 6. During normal operation of the engine, the major part of the conversion of exhaust gases takes place in the first catalyst 4. The second catalyst 6, which is located downstream of the first catalyst 4, however provides extra security and will convert any exhaust gases not converted by the first catalyst 4.

In the illustrated embodiment, a first lambda (air to fuel ratio) probe 3 is arranged upstream of the first catalyst 4 for measurement of the lambda to enter the first catalyst 4. In this type of catalytic converter system, the first or primary lambda probe 3 is normally a linear type probe.

A secondary lambda probe 5 is arranged downstream of the first catalyst 4, in this case upstream of the second catalyst 6. The primary lambda probe 3 and the secondary lambda probe 5 are coupled to a control unit 7 for control of the fuel supply to the engine 9 in order to achieve exhaust gases having an air/fuel ratio as desired for appropriate function of the catalytic converter.

During normal operation of the engine, the air/fuel mixture that reaches the exhaust pipe 2 from the engine 9 will be either "rich", i.e. having lambda <1, or "lean", i.e. having lambda >1. In order to enable the first catalyst 4 to satisfactory convert the exhaust gases, it is necessary that the mixture varies from "lean" to "rich" and back again, so as to alternately fill and drain the first catalyst 4 of oxygen. This function may be controlled as is known in the art by using the responses of the primary lambda probe 3 and the secondary lambda probe 5 to control the mixture from the engine 9. To achieve satisfactory conversion, the air/fuel mixture upstream of the first catalyst (at the primary lambda probe 3) is controlled to "rich" or "lean" in an opposite relationship to the "rich/lean" response of the secondary lambda probe 5, being positioned downstream of the first catalyst 4. Thus, the lambda upstream of the first catalyst 4 will periodically shift between a lambda less than 1 and a lambda greater than 1 during normal operation. In the illustrated embodiment, this control is achieved by the control unit 7 of the lambda probes being connected to an engine control unit 10 of the engine 9.

The primary and secondary lambda probes 3, 5 may be essentially linear probes, or binary ("non-linear") probes. It is preferred that the primary lambda probe 3 is a linear probe, whereas the secondary lambda probe 5 is a binary lambda probe.

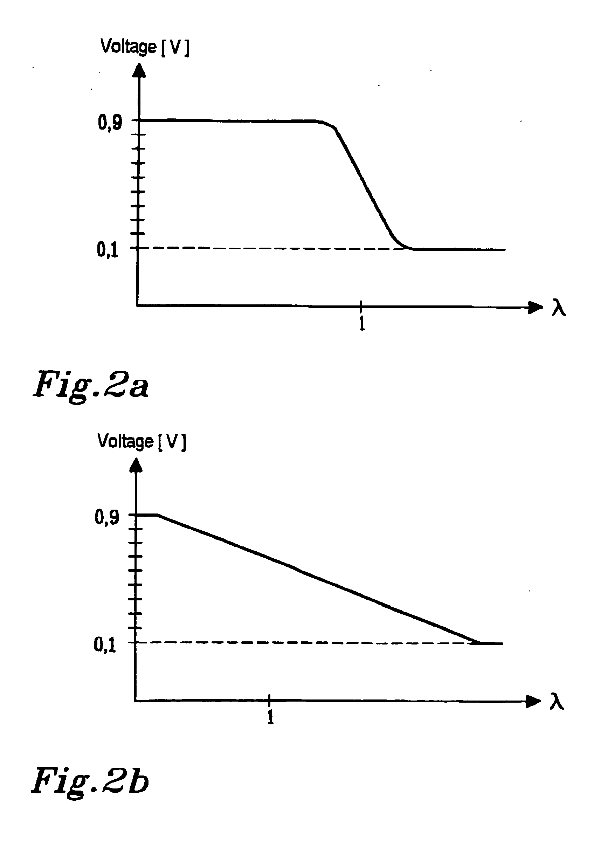

A typical characteristic of a well-functioning binary lambda probe is exemplified in Fig. 2a. The probe has a first static region, where the response voltage of the probe is constant "high" ― in this case about 0.9 V. Further, the probe has a second static region, where the response voltage of the probe is constant "low" - in this case about 0.1 V. In an intermediary region, including lambda = 1, the probe has a dynamic region where the response voltage decreases from "high" to "low" as lambda increases. In the illustrated example, lambda=1 corresponds to a response of 0.625 V. As mentioned previously, in the dynamic region, a binary lambda probe may at least partly have a linear characteristic.

In contrast, in Fig.2b a typical characteristic of a "continuous" or "linear" lambda probe is illustrated. The characteristic of the linear lambda probe includes a wide dynamic region where the response voltage alters with altering lambda. Ideally, in the dynamic region, the response of the probe is generally linear to lambda, as illustrated in Fig. 2b. Although the probes herein have been described as giving a response voltage, probes could alternatively give their response as a response current. In fact, for linear lambda probes, the response signal is normally a current instead of a voltage. The general functions of the probes are of course not affected by the selection of response signal.

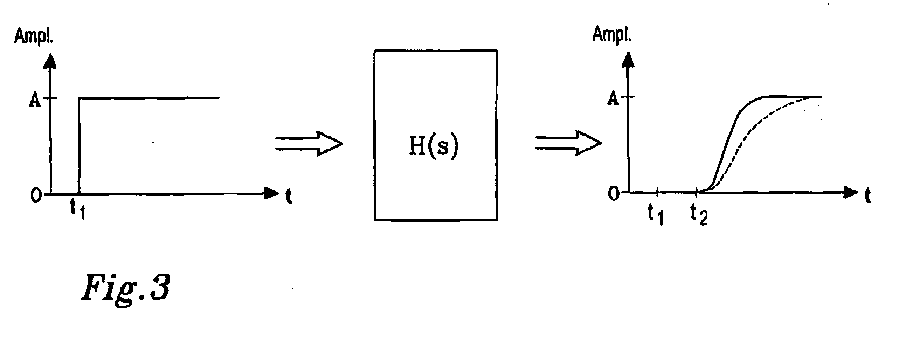

In Fig. 3, the response delay and dynamic response of a lambda probe is illustrated as seen with reference to time. Considering an input pulse starting at time t1 and having an amplitude A as shown to the left in Fig. 3, the lambda probe will essentially function as a filter having a response function H(s). The resulting response from the lambda probe will be a curve as generally illustrated to the right in Fig. 3. The response curve starts at a time t2 being greater than the start time of the input pulse t1. The difference between t2 and t1 may be referred to as the response delay of the probe. Well-functioning probes will have a certain response delay, although ageing and/or tampering may increase this delay. Further, the response curve needs a certain period of time to reach the amplitude A, which illustrates the dynamic response of the probe. In Fig. 3, the continuous line shows the behaviour of a well-functioning probe. The broken line indicates the behaviour of a faulty probe, having a slow dynamic response.

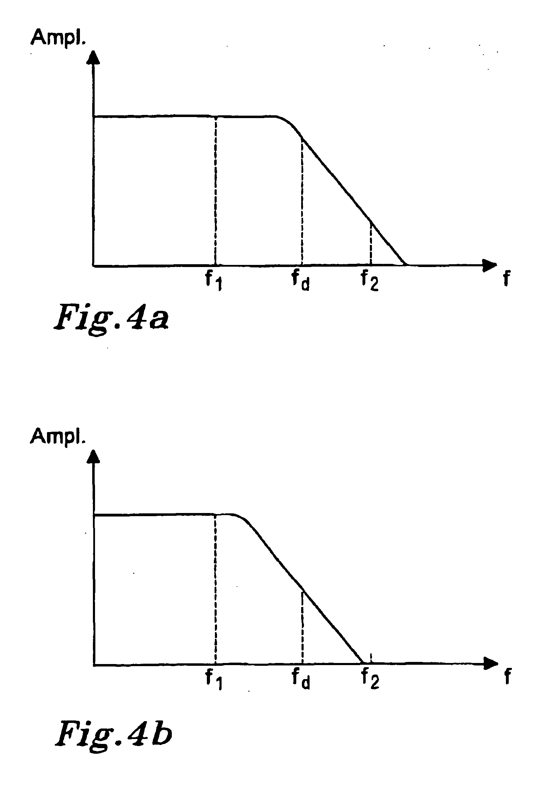

In Figs 4a and 4b, the difference between a well-functioning and a faulty probe is illustrated with reference to their ability to respond to input signals having different frequency. The behaviour of a well-functioning probe is illustrated in Fig. 4a. The well functioning probe has a certain frequency range within which the probe is capable of following the alterations in input signal rather well. As the frequency increases, the capacity of the probe declines. A faulty probe, as illustrated in Fig. 4b, has a narrower band in which the probe may follow alterations in input signal, whereafter the capacity declines.

Thus, considering a relatively low frequency f1, the well-functioning probe and the faulty probe as exemplified in Fig. 4 will both be able to trace the signal, i.e. to give a satisfactory response. However, for a relatively high frequency f2, the well-functioning probe will produce a reduced response, whereas the faulty probe will not be able to produce any useful response at all.

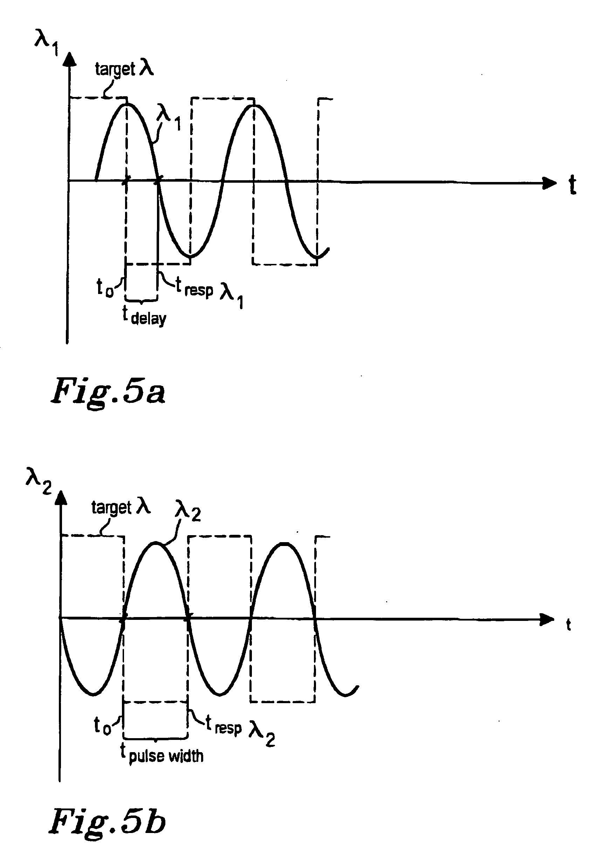

Fig. 5a illustrates the response from a primary lambda probe having a certain delay time in relation to target lambda (i.e. the true lambda at the primary lambda probe). It may be seen that the slow primary lambda probe reacts to an alteration of target lambda occurring at a time t₀ only after a time period t_{delay}. The shorter the t_{delay} time, the better the lambda probe.

Fig. 5b illustrates the response from a secondary lambda probe in relation to the target lambda. Since, in an arrangement as illustrated in Fig. 1, the target lambda is generally controlled so as to alter when the secondary lambda probe alters, there is normally no time delay involved. Instead, the time passing between two alterations in the response of the lambda probe is relevant, since it is an indication of the function of the catalyst. A well-functioning catalyst can oxidise/deoxidise a relatively large amount of oxygen. In other words, a rich/lean alteration in target lambda will not be detected by the secondary lambda probe until the oxidation/deoxidation capacity of the catalyst is depleted. Hence, the time from an alteration in target lambda until the alteration is detected by the secondary lambda probe, herein related to as the pulse width time, will be relatively long for a well-functioning catalyst. The longer the pulse width, the better the catalyst.

For the purpose of performing a diagnosis of the catalyst, it is preferred to let the target lambda deviate from lambda=1.0 to a larger extent than what is used during normal driving conditions. The reason for this is to lessen the time required for performing the diagnosis. A more pronounced rich or lean lambda will naturally deplete the oxidation/deoxidation capacity of the catalyst in a shorter time period than a less pronounced rich or lean lambda. Hence, in the diagnosis sequence according to the invention, it is preferred to use lambda alterations in the range 0.09 - 1.10, preferably 0.94 -1.06. The relatively high deviation from lambda = 1.0 will also contribute to accurate test values being robust towards differences in the capacities of the injectors which might cause variable lambda between cylinders.

According to the proposed diagnosing method, the target lambda upstream of the catalyst is varied so as to alter between a rich and lean state, respectively, at a time t₀. The primary lambda probe delay time t_{delay} and the catalyst pulse width time t_{pulse width} are measured as explained above in relation to Figs 5a and 5b. The delay time and the pulse width time are measured simultaneously, using the same alteration in target lambda. Hence, the influences of the two components of the catalyst system are evaluated individually.

For adequate accuracy in the measurements, it is preferred that a predetermined number of alterations in target lambda is performed, and the delay time and pulse width are measured at each alteration. Preferably, the number of pulses is in the range 3 to 20.

For evaluation of the results, some type of mean calculation may be made using the measured delay time and pulse widths. A method that has been found to be advantageous is a "jumping mean" method, using the mean values obtained from the diagnosis sequences of the actual and one or more previous driving cycles for forming a total mean value. For example, the values obtained from the latest five pulses may be used for performing the "jumping mean" calculation.

The mean values are preferably compared to a predetermined threshold delay time and/or a predetermined threshold pulse width time. The predetermined threshold values may be based on the exhaust emission increase due to the faulty component. Thus, adaptation may be made to legal requirements for acceptable emission levels. The effect of the faulty component on the exhaust emission may depend also on the function of other parts of the exhaust aftertreatment system. If e.g. the lambda-control algorithm is robust, the components may be "more faulty" before the exhaust emissions are influenced to an extent so as to motivate an alert from the diagnosis system.

Regarding the delay times, the threshold delay time will be a maximum time limit, where mean delay times larger than the threshold delay time should indicate that the primary lambda probe is faulty. Regarding the pulse widths, the threshold pulse width will instead be a minimum limit, where mean pulse widths being less than the threshold pulse widths indicates that the catalyst is faulty.

Preferably, the detection of a faulty component should result in a warning being issued to the driver, such as the activation of a warning lamp telling the driver to take the vehicle to a garage for repair.

The diagnosis sequence of the invention may advantageously be performed when the engine is idling. This is believed to be advantageous since the idling condition occurs relatively often during driving, at least in environments such as city driving where the importance of a well-functioning catalyst system is particularly high. Accordingly, the diagnosis sequence may be performed sufficiently often so as to ensure that a faulty system is recognized as soon as possible.

The diagnosis sequence as proposed herein provides highly accurate results. However, the inventors have identified that a highly accurate result is most relevant for components being close to the limit for being classified as faulty. The exact condition of a very well-functioning component is not as relevant, as long as it may be established that the component is far from the limit for being classified as faulty.

Hence, it is proposed to include the diagnosis sequence in a method for diagnosing an exhaust aftertreatment system, wherein a pre-diagnosis sequence is performed prior to deciding whether or not to perform a full diagnosis sequence as described above.

In the pre-diagnosis sequence, as in the diagnosis sequence, the primary lambda probe delay time and the pulse width time are measured. However, the pre-diagnosis sequence will use only one alteration of target lambda and hence one set of delay time and pulse width in order to perform a first rough evaluation of the condition of the components. The delay time obtained from the single measurement will be compared with a pre-diagnosis threshold delay time. The pre-diagnosis threshold delay time should be set to be relatively far from the limit for classifying the primary lambda probe as faulty. In other words, the pre-diagnosis threshold delay time should be set to be so short, that even if measured on one pulse only, a primary lambda probe exhibiting such a short or shorter delay time cannot be in the vicinity of being faulty. Hence, the pre-diagnosis threshold delay time is a shorter time period than the predetermined threshold delay time used in the diagnosis sequence as described above. Similarly, the pre-diagnosis pulse width time should be set to be so long, that even if measured on one pulse only, a catalyst exhibiting such a long or longer pulse width cannot be in the vicinity of being faulty.

In fact, if the measurement of the pulse width time continues for more than the pre-diagnosis pulse width time, the measurement may be interrupted since it is already established that the catalyst is well-functioning. However, for logging purposes, one might optionally complete the measurement of the pulse width time and store it in a memory for later follow-up. Large scale, long term follow-up may be made to serve for full life catalyst and probe rapid ageing severity control. The ageing severity very much affects the cost for a catalyst, which is a significant part of the cost for an engine.

In order to obtain universal pulse width values that are comparable between different engine variants, the pulse width values may be normalized based on the actual gas flow.

The pre-diagnosis sequence will provide a rough classification of the primary lambda probe and the catalyst as well-functioning or as suitable for further diagnosis. If both the primary lambda probe and the catalyst are classified as well-functioning in the pre-diagnosis sequence, no further diagnosis is performed at this point. At the next suitable moment for performing a diagnosis method, the pre-diagnosis sequence will run again, indicating whether or not to perform the full diagnosis sequence thereafter.

If both the primary lambda probe and the catalyst are classified as suitable for further diagnosis in the pre-diagnosis sequence, a diagnosis sequence as described above will be performed regarding both components. In this case, the alterations in target lambda are controlled such that the lambda shifts when the pulse width and the delay time has been measured ― i.e. when the alteration of target lambda has been detected upstream and downstream of the catalyst.

A well-functioning, new catalyst may have a pulse width of about 14 seconds. In a full aged catalyst, the pulse width may have shortened to about 6 to 9 seconds. With further ageing or other faults, the pulse width may be as short as about 1 second or even shorter. A well-functioning, new lambda probe may have a time delay of about 0.8 seconds, which increases as the lambda probe ages. Thus, if both the lambda probe and the catalyst are severely aged, the pulse width and the delay time may be of approximately the same size. Thus, it is not possible to tell which of the measurement of the pulse width and the time delay will take most time. This is why both measurements must be ascertained before the next alteration of target lambda is made. By this method, highly accurate test values for the pulse width and the delay time will be created simultaneously.

In certain exhaust aftertreatment systems, there is a control algorithm which will increase the deviation of target lambda from lambda=1.0 if the response from the primary lambda probe does not reach the target value. If such a control algorithm is involved, the target lambda deviation may be increased, which will result in a shorter pulse width time than what would be the case without the deviation increase. This type of anomaly may however be dealt with by normalizing for the measurable primary probe influence in order to restore catalyst test value accuracy and independency.

If the pre-diagnosis sequence indicates that the catalyst is well-functioning, but that the primary lambda probe should be further diagnosed, it is suitable to perform the diagnosis sequence such that the alterations in target lambda are controlled independently of any response detected downstream of the catalyst, e.g. by a secondary lambda probe. This is because a well-functioning catalyst will have relatively long pulse width times, such that, if the alterations of target lambda are controlled by the response downstream of the catalyst, the time required for having a number e.g. ten alterations of lambda will be rather long, namely ten pulse widths long. If instead the target lambda is controlled independently of the response downstream of the catalyst, the time required for the diagnosis sequence may be considerably shortened.

If the pre-diagnosis sequence indicates that the catalyst is suitable for further diagnosis, but that the primary lambda probe is well-functioning, the alterations of target lambda may be controlled by the response downstream of the catalyst.

Shifting between the pre-diagnosis and the full diagnosis sequence thus shortens the overall time period needed for performing a diagnosis of the primary lambda probe and the first catalyst. Hence, the diagnosis method may be run relatively often.

Preferably, the method includes also a diagnosis sequence for diagnosing the secondary lambda probe. Advantageously, the secondary lambda probe diagnosing sequence may be performed before, after or interrupting the primary lambda probe and catalyst diagnosing sequence.

A preferred secondary lambda probe diagnosis sequence comprises, when the first catalyst is essentially oxidized or alternatively essentially deoxidized, controlling the target lambda upstream of the catalyst so as to vary the lambda periodically at least partly in a nominal dynamic range of the secondary lambda probe, measuring the response of the secondary lambda probe to said periodical variation, and determining a condition measure of the secondary lambda probe using said response.

The secondary lambda probe diagnosis requires 1) confidence that the first catalyst is either filled or emptied of oxygen, 2) performance of lean or rich oscillations of target lambda with low frequency and 3) preferably a second catalyst. These conditions may all be met during the proposed catalyst and primary sensor diagnosis.

This secondary lambda probe diagnosis sequence is particularly suitable for combination with the diagnosis sequence and pre-diagnosis sequence as described above. The secondary lambda probe diagnosis sequence is also advantageously performed when the engine is idling.

The first catalyst being essentially oxidised or alternatively deoxidised when performing the diagnosis results in the first catalyst being unable to compensate for at least some of the variations in lambda. Hence, the periodically varying lambda upstream of the first catalyst will ideally result in an at least partly varying lambda downstream of the first catalyst, at the secondary probe.

The periodical variation of lambda is selected such that lambda varies at least partly in the nominal dynamic range of the secondary lambda probe.

With a "dynamic range" is meant a range such that, if the lambda is varied in the range, the response from the lambda probe varies. In contrast, lambda probes may have a static range where the response from the lambda probe is essentially constant, although the lambda is varied in the range (see Fig. 2a). With "nominal dynamic range" is meant the expected dynamic range of a probe, if performing its function as intended and not being tampered with. The "nominal dynamic range" is thus a range determined by the probe as manufactured.

Accordingly, the response of a well-functioning secondary lambda probe will reflect the variations of lambda being performed at least partly in the nominal dynamic range of the probe. However, a faulty secondary lambda probe having a slow response time will not be able to reflect the variations of the surrounding lambda as well as a well-functioning probe. Thus, by analysing the response from the secondary lambda probe it is possible to determine a condition measure of the probe, indicating the state thereof.

Suitably, the lambda probe may be a binary lambda probe, and the lambda is periodically varied at least partly in the nominal dynamic region of the binary lambda probe. A binary lambda probe is a probe having a first static range, wherein response of the lambda probe is generally set "high", a second static range, wherein the response of the lambda probe is generally set "low", and an intermediary dynamic range, where the response of the probe varies from "high" to "low" depending on the surrounding lambda. The intermediary dynamic range is set in the region about lambda =1, whereas a "rich" lambda <1 generally corresponds to a "high" response, and a "lean" lambda >1 generally corresponds to a "low" response from the binary probe. Thus, although binary probes are sometimes referred to as "non-linear" probes, they may exhibit a generally linear behaviour in the dynamic range (see Fig. 2a).

In the first mentioned alternative of the method, where the first catalyst is essentially deoxidised, the periodic variation of the lambda is preferably defined such that, for a main portion of the variation, the lambda is s 1. In this situation, the catalyst is essentially void of oxygen. When the lambda is varied in a region where lambda is s 1, e.g. on the "rich" side, the catalyst is unable to compensate for the rich lambda by adding oxygen to the mixture. Accordingly, the periodical variation in lambda upstream of the catalyst results in an at least partly periodically varied lambda downstream of the catalyst, at the secondary probe. Thus, a varying lambda surrounding the secondary probe is created and may be used for determining a condition measure thereof as mentioned above.

The periodic variation of the lambda may be such that lambda s 1 for at least 90% of the variation duration, preferably 90-99% of the variation duration.

Advantageously, the lambda is periodically varied in the range 0.85 to 1.1, preferably in the range 0.9 to 1.01, most preferred in the range 0.94 to 1.005 during the diagnosis of the secondary lambda probe. The above-mentioned ranges are particularly suitable when a binary lambda probe is diagnosed.

In another alternative, the first catalyst is essentially oxidised, and the periodic variation of the lambda is defined such that, for a main portion of the variation, the lambda is ≥ 1. In this situation, the catalyst is essentially full of oxygen. When the lambda is varied in a region where lambda is ≥ 1, e.g. on the "lean" side, the oxidised catalyst is unable to compensate for the lean lambda by removing oxygen from the mixture. Accordingly, the periodical variation in lambda upstream of the catalyst results in an at least partly periodically varied lambda downstream of the catalyst, at the secondary probe. Thus, this is a second method of creating a varying lambda surrounding the secondary probe which may be used for determining a condition measure thereof as mentioned above.

In this case, the periodic variation of the lambda could be such that lambda ≥ 1 at least 90% of the variation duration, preferably 90-99% of the variation duration. Advantageously, the lambda may be periodically varied in the range 0.9 to 1.15, preferably in the range 0.99 to 1.1, most preferred in the range 0.995 to 1.06.

Regardless of whether the periodic variation of the lambda is created on the "rich" or the "lean" side, the lambda may preferably be varied essentially following a sine curve. A sine curve has the advantage of creating a response of the probe which is relatively easy to analyse, and is relatively stable in view of different fuel injector reactions and flow properties. Nevertheless, although less preferred, other curve shapes are useful, as long as they provide a response which is analyzable.

Advantageously, the lambda may vary periodically with a frequency in the range 0.1 - 1 Hz, preferably in the range 0.25 - 0.5 Hz, most preferably about 0.33 Hz during the secondary lambda probe diagnosis. As such, a number of periods sufficient for analyse may be executed during a relatively brief period of time. This makes it easier to find an occasion to perform the diagnosis of the secondary lambda probe during normal operation of a vehicle.

Preferably, the periodical variation of lambda is performed during a duration time being in the range 3 to 7 s, preferably 6 to 7 s. It is an advantage with the proposed method that it may be performed within relatively brief duration times. Accordingly, the amount of exhaust gases that needs to be taken care of during the diagnosis interval, when the catalytic converter does not operate normally, is limited.

Advantageously, the periodical variation of lambda is performed when the engine is idling. Alternatively, the periodical variation of lambda may be performed under normal operating conditions of the engine.

Preferably, the method may include a verification step performed before periodically varying the lambda, in which it is verified that the first catalyst, situated upstream of the secondary lambda probe is essentially oxidised or alternatively deoxidised. Accordingly, it is ensured in which state (oxidised/deoxidised) the first catalyst is before selecting whether the periodical variation of lambda should preferably be made mainly on the "rich" side or on the "lean" side as described above. For determining the oxidation state of the first catalyst before start of the periodical variation of lambda, the response from the secondary lambda probe may suitably be used. Other methods are however possible.

Advantageously, a primary lambda probe is arranged upstream of the first catalyst. Such a primary lambda probe is usually selected to be a linear (or "continuous") probe.

Preferably, the method may include analysing the response from the primary lambda probe so as to ascertain that the lambda varies periodically upstream of the first catalyst when performing the diagnosis.

The condition measure being determined based on the response from the secondary lambda probe may advantageously be indicative of the voltage variations of the response caused by the periodical variation of the target lambda.

For the secondary lambda probe to be classed as "well-functioning", it is not necessary that it reflects the periodical variations of the lambda perfectly. The filter effect of the first catalyst and the nominal dynamic range of the secondary lambda probe will normally result in the response of the lambda probe being a complex function. However, the extent to which the periodical variation of the lambda may be traced in the variation of the response may be used for indicating the state of the secondary lambda probe.

For a correct diagnosis of the secondary probe, the method may advantageously include repeating the diagnosis on a number of occasions so as determine a number of condition measures, forming a mean of said condition measures, and determining the state of the binary lambda probe based on said mean of condition measures.

Advantageously, the state of the binary lambda probe is determined by comparing said mean of condition measures to a threshold value. Such a threshold value may be determined e.g. by performing a number of measurements on well-functioning as well as faulty probes, for a certain type of catalytic converter. From these measurements, a suitable threshold value may be determined.

Advantageously, a second catalyst may be mounted downstream of the first catalyst, the oxidized/deoxidized state thereof being controllable so as to enable conversion of exhaust gases during the diagnosis. In order to enable conversion of exhaust gases in the second catalyst during the diagnosis, it is preferred that the state of the second catalyst is adjusted as regards oxygen level and the corresponding conversion ability. The adjustment may use the lambda measured upstream of the second catalyst as input. Advantageously, the oxidised/deoxidised state of the second catalyst is selected depending on which side (rich or lean) the diagnosis is performed.

In a second aspect there is provided an arrangement for slow response diagnosing a secondary lambda probe mounted downstream of a first catalyst in a catalytic converter for a vehicle, having means for, when the first catalyst is essentially oxidised or alternatively essentially deoxidised, controlling the lambda (air to fuel ratio) upstream of the first catalyst so as to vary the lambda periodically at least partly in the nominal dynamic range of the secondary lambda probe, means for measuring the response of the secondary lambda probe to said periodical variation, and means for determining a condition measure of the secondary lambda probe using said response.

The combination of the pre-diagnosis sequence, the primary lambda probe and catalyst diagnosis sequence and the secondary lambda probe diagnosis sequence thus enables a full diagnosis of the catalyst converter system to be performed, wherein the influences of the different components involved may be readily separated. Thus, in the case of a faulty exhaust gas treatment system, it is possible to pinpoint which component or components that need repair or replacement.

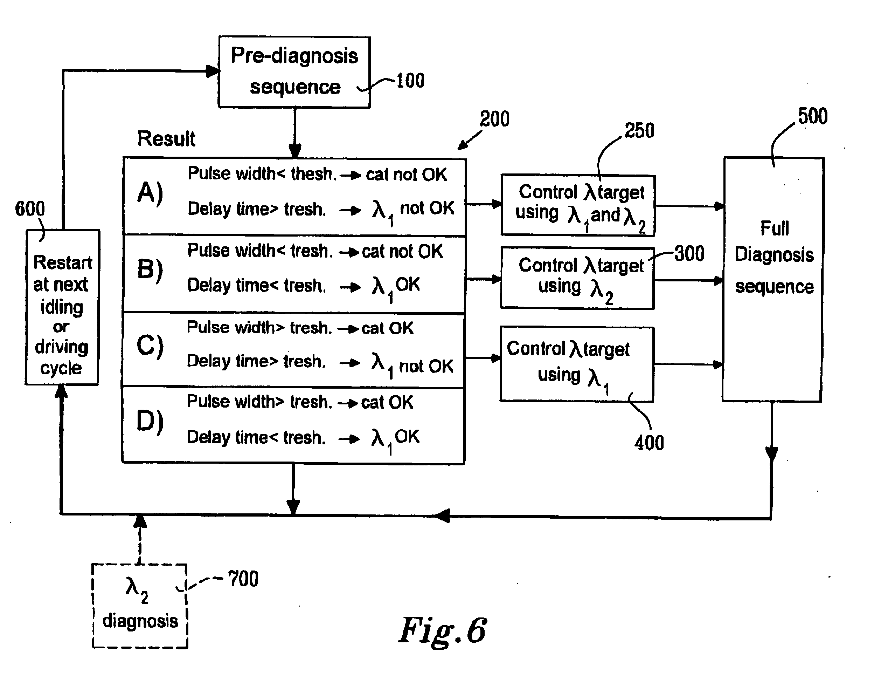

Fig. 6 is a flowchart explaining the shift between the pre-diagnosis sequence and the primary lambda probe and catalyst full diagnosis sequence. The pre-diagnosis sequence (100) is started at an occasion when the engine is idling. As explained above, in the pre-diagnosis sequence, the target lambda upstream of the catalyst is altered once, and the pulse width and time delay is measured. The resulting pulse width is compared to a pre-diagnosis threshold pulse width, and the resulting delay time is compared to a pre-diagnosis threshold delay time. The results of the comparisons (200) determine whether or not a full diagnosis sequence (500) shall be performed. If the measured pulse width is less than the pro-diagnosis threshold, a full diagnosis (500) shall always be performed. In this case, the full diagnosis may be performed using the response from the secondary lambda probe to control target lambda (300). If the measured pulse width is greater than the pre-diagnosis threshold, indicating that the catalyst is ok, but the measured delay time is greater than the pre-diagnosis threshold, a full diagnosis (500) shall also be performed. However, in this case controlling the alterations of target lambda using the secondary lambda probe would take excessively long time. Instead, control of target lambda during the full diagnosis is made independently of the secondary probe signal (400). Once it has been determined how the target lambda shall be controlled (300), (400), the full diagnosis sequence is performed, possibly resulting in an indication to the driver if the primary lambda probe and/or the catalyst is found to be faulty. The diagnosis method including the pre-diagnosis sequence will then restart at the next idling.

If in the pre-diagnosis sequence the pulse width is found to be greater than the pre-diagnosis threshold and the delay time less than the pre-diagnosis threshold, the catalyst and the primary lambda probe are immediately classified as well functioning. The diagnosis method including the pre-diagnosis sequence will then restart at the next idling.

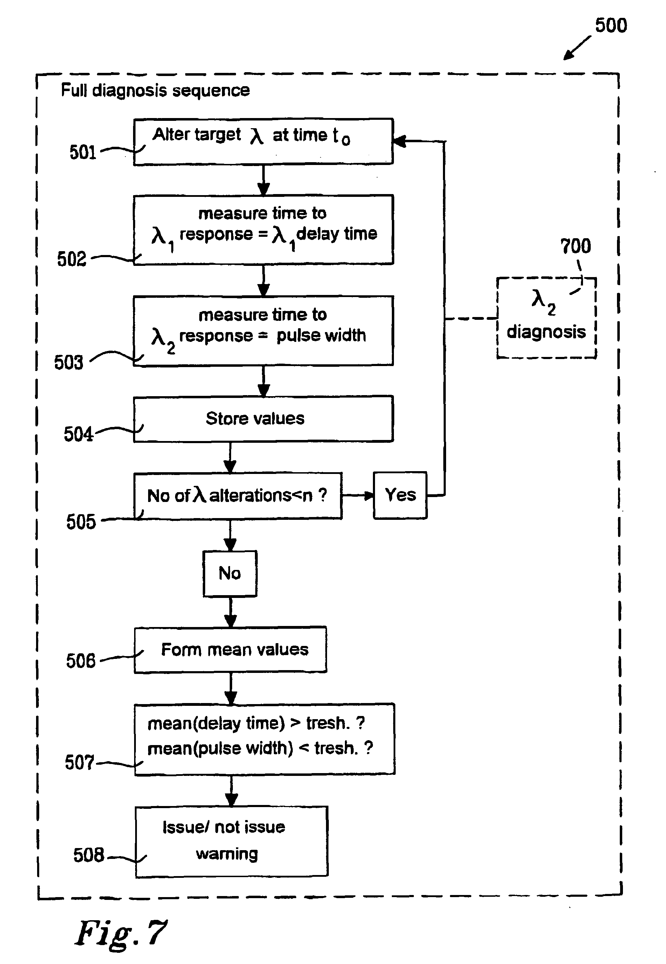

Fig. 7 is a flowchart illustrating the full diagnosis sequence (500). First, the target lambda is altered at a time t0 (501). The time from t0 until the primary lambda probe responds to the alteration of lambda is measured being the delay time (502). Also, the time from t0 until the secondary lambda probe responds to the alteration of lambda is also measured being the pulse width (503). The measured values are stored or alternatively a jumping mean value using previous measurements may be determined (504). If the number of alterations in target lambda performed during the diagnosis sequence is less than a predetermined number (505), in this example ten, the diagnosis sequence continues with a new alteration of target lambda (501). When a sufficient number of alterations of target lambda and corresponding values for delay times and pulse widths have been calculated, mean values are formed (506) to reflect an average delay time and pulse width. The mean values are compared to diagnosis threshold values (507). If the mean delay time is greater than the threshold, a warning will be issued that the primary lambda probe is faulty (508). If the pulse width time is less than the threshold, a warning will be issued that the catalyst is faulty. If both values are OK, no warnings will be issued. At the next idling the diagnosis will continue, starting with a pre-diagnosis sequence as indicated in Fig. 6.

As regards the secondary lambda probe diagnosis sequence, this may be performed at various steps in the diagnosis method. In Figs 6 and 7 two such exemplary steps are indicated with dotted lines. However, it should be noted that only one secondary lambda probe diagnosis sequence needs to be made at each idling.

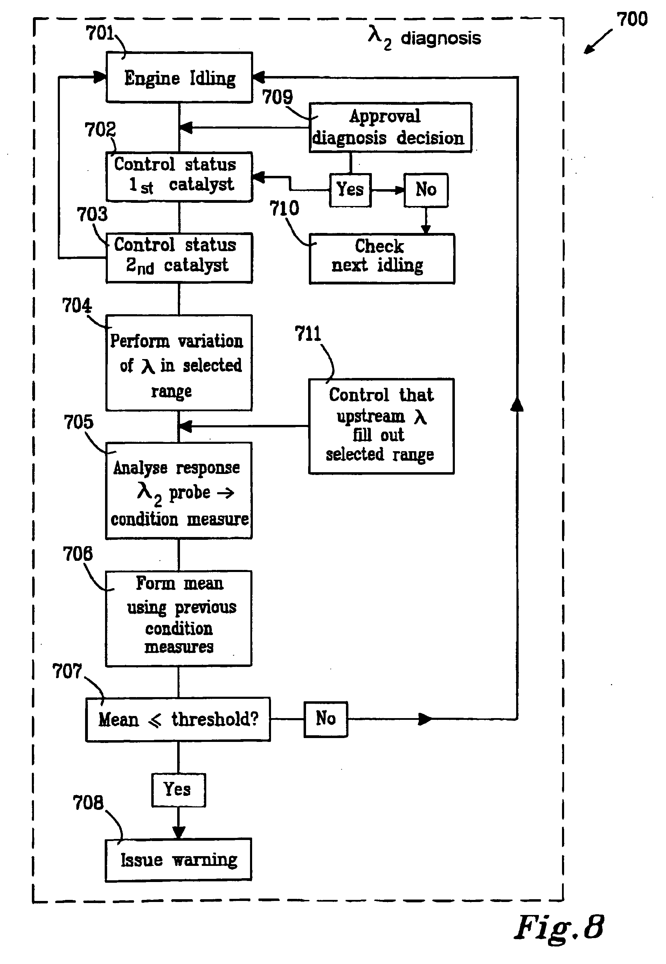

Fig. 8 is a flowchart illustrating the proposed secondary lambda probe diagnosis sequence. When the engine is idling 701, it is first decided whether to run a diagnosis or not 709. If a diagnosis is to be run, the oxidised/deoxidised status of the first and second catalyst is checked 702, 703. Thereafter, the periodical variation in lambda upstream of the first catalyst 4 is performed 704. The periodical variation is controlled for accuracy upstream of the first catalyst 4, e.g. using a primary lambda probe 711. The periodical variation of lambda results in a response signal from the secondary lambda probe, which is analysed to provide a condition measure of the probe 705.

Thereafter, a mean is formed using a number of previous condition measures together with the recently achieved measure 706. Advantageously, two to four condition measures achieved from different diagnosing sessions could be used to form the mean measure. The mean measure is compared to a threshold value 707. If the mean is less than the threshold, a warning is issued that the secondary probe is defect 708. If the mean is greater than the threshold, the diagnosis may be repeated at a later moment when the engine is idling again 701.

According to the proposed method for diagnosing a secondary lambda probe, the lambda surrounding the probe should be varied periodically at least partly in the dynamic range of the probe. To facilitate analysis of the response from the probe, it is preferred that the frequency for the periodical variation of lambda is selected such that the difference between a well-functioning probe and a faulty probe is clear. In Fig. 4, a frequency for diagnosis is exemplified as fd. In this case fd is selected in the frequency region where the capacity of the well-functioning probe to trace the input signal starts declining. For the faulty probe, the same frequency fd is situated in the region where the capacity to trace the input signal is clearly reduced, though still enabling the output of a response to be analysed.

In view of the above it is understood that a suitable frequency for the periodical variation of lambda may be selected by studying the amplitude to frequency behaviour of a number of well-functioning and faulty probes.

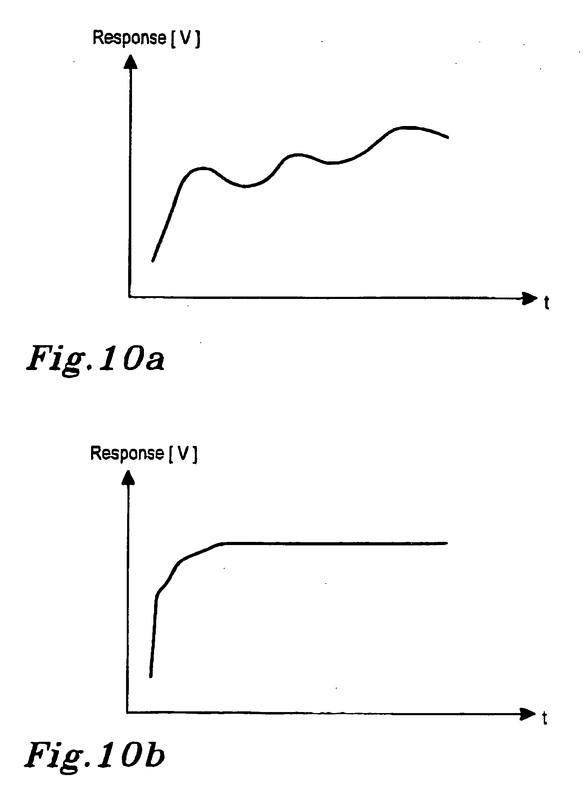

In Fig. 10a, the time response of a well functioning secondary probe to a sinusoidal periodical variation of lambda with a frequency as exemplified in Fig. 4 is illustrated. It may be gleaned that the amplitude of the response signal does not follow the sinusoidal variation of the input signal perfectly, Nevertheless, the variation may is clearly discemible.

In Fig. 10b, the time response of a faulty secondary probe to a sinusoidal periodical variation of lambda with a frequency as exemplified in Fig. 4 is illustrated. Here, it may be gleaned that the periodical variation of lambda is hardly discernible in the response signal.

For evaluating the response of a probe during diagnosis, a threshold value may be used. In order to set a suitable threshold value, it is preferred to study a number of well-functioning and faulty probes.

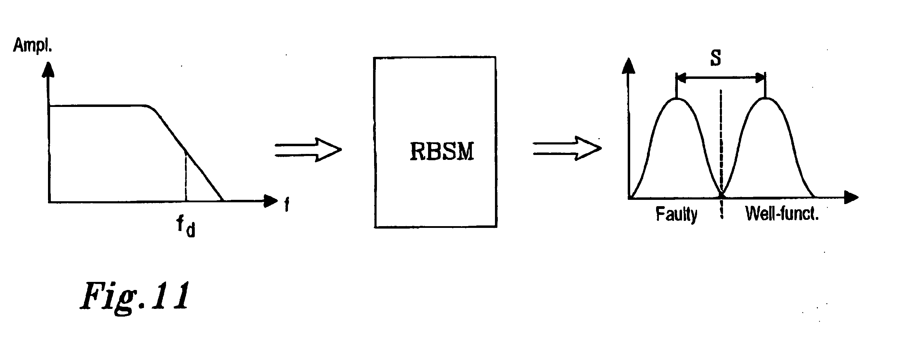

As illustrated in Fig. 11, the response from the probe may be evaluated in a Rear Binary Sensor Monitor (RBSM) and analysed. When studying a number of probes, the result from the RBSM will form two normal distributions, one distribution corresponding to faulty probes (to the left in Fig. 11) and one distribution corresponding to well-functioning probes (to the right in Fig. 11). The separation s between the distributions is depending on the number of samples used for the evaluation. However, a threshold value may be determined in between the variations as indicated with the broken line in Fig. 11.

It is understood that several mathematical methods are available for evaluating the response from the probes to produce the normal distributions, as is known to a person skilled in the art.

Further, although in the Figures, the periodical variation is illustrated as including one frequency only, it may be envisaged to use periodical variations including several frequencies.

According to the proposed method for diagnosing a secondary lambda probe mounted downstream of a first catalyst in a catalytic converter for a vehicle, it may advantageously first be determined whether the first catalyst is essentially oxidised or alternatively essentially deoxidised. This procedure may be performed by studying the response of the secondary lambda probe during normal operation of the catalytic converter. To this end, the response of the secondary lambda probe may be studied in combination with other factors, such as the primary lambda probe. Generally, if the secondary lambda probe is a binary probe, a response shifting to "high" in combination with the primary lambda probe <1 during a period of time, e.g. a few seconds, before the shift, corresponds to the first catalyst being essentially deoxidised, and a response shifting to "low" in combination with the primary lambda probe >1 during a period of time before the shift corresponds to the first catalyst being essentially oxidised. Using a binary probe as exemplified in Fig. 2, a functional limitation might be set such that a response < 0.2 V corresponds to a generally oxidised first catalyst, and a response > 0.7 V corresponds to a generally deoxidised first catalyst.

Alternatively, it is possible to actively set the oxidation state of the first catalyst 4 by varying the lambda upstream of the first catalyst 4 on the "rich" or the "lean" side, suitably from 0.9 to 0.96 or alternatively 1.04 to 1.10. However, it is believed that active setting of the oxidation state will normally not be necessary.

Having this determined the state of the first catalyst, the lambda (air to fuel ratio) upstream of the first catalyst should be controlled so as to vary the lambda periodically at least partly in the nominal dynamic range of the secondary lambda probe. Again, in the example illustrated in Fig. 2a, the dynamic range of the binary lambda probe includes at least lambda from about 0.97 to 1.02. The dynamic range as illustrated in Fig. 2a is characteristic for a useful type of binary probes.

The control of the lambda in the region of the secondary lambda probe 5 may be made in various ways. Preferably, the fluid injection to the engine 9 may be periodically varied so as to create the desired variation in lambda. Alternatively, air could be introduced to the fuel/air mixture in the region of the secondary lambda probe via a secondary air inlet.

Preferably, if the first catalyst 4 is essentially deoxidised, the periodic variation of the lambda is defined such that, for a main portion of the variation, the lambda is ≤ 1. Thus, the main portion of the variation occurs on the "rich" side. Since the catalyst 4 is deoxidised, a "rich" mixture coming from the engine 9 via the exhaust pipe 2 will pass through the first catalyst 4 while remaining a "rich" mixture. This is because the deoxidised first catalyst 4 is unable to compensate for the "rich" mixture by addition of oxygen thereto. Accordingly, the variation occurring mainly on the "rich" side will also reach the secondary probe 5 located downstream of the first catalyst 4.

With "main portion" of the periodical variation is generally meant that more than 75% of the lambda if plotted in a lambda versus time diagram will be present on either side of lambda=1. Preferably, more than 90% of the lambda varies on the selected "rich" or "lean" side. In a preferred embodiment of the invention, 90 to 99% of the lambda is present on the selected side of lambda=1. Thus, a great deal of the periodical variation will be useful for assessment of the function of the secondary lambda probe.

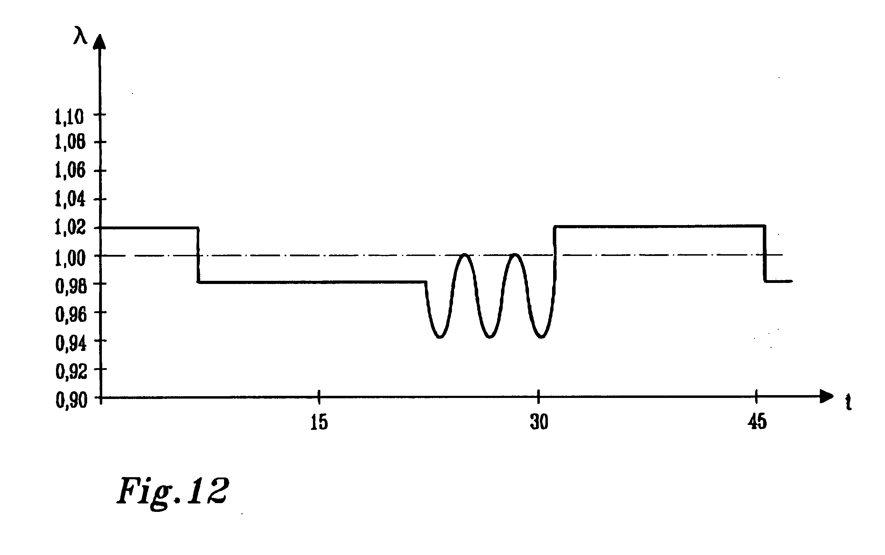

In Fig. 12, an exemplary embodiment of a periodical variation of lambda is depicted. In this case, the lambda is periodically varied according to a sine curve. As may be gleaned from Fig. 12, in this case, lambda is varied periodically from 0.94 to 1.005. Thus, lambda enters and exits the dynamic region of the binary lambda probe, while generally remaining on the "rich" side of the lambda diagram. In Fig. 12, two full periods are performed for the diagnostic. Thereafter, the catalytic converter starts its normal function, during which lambda alters stepwise from a minimum value of 0.98 to a maximum value of 1.02.

The frequency of the periodical variation of lambda in the illustrated embodiment is 0.33 Hz. Generally, the frequency should be selected so as to be in a range suitable to indicate failures in the probes due to slow response times. In contrast, the stepwise behaviour of lambda during normal operation of the catalyst has in the illustrated embodiment a frequency of about 0.067 Hz.

It is preferred that the secondary lambda probe diagnostic takes place on the "rich" side of the lambda spectrum, as illustrated in Fig. 12. This is because the state of the second catalyst is normally close to oxidised when the engine idles, e.g. after start-up thereof after a shorter fuel cut during previous deceleration.

However, it is possible to perform the secondary lambda probe diagnostic also on the "lean" side of the lambda. In this case,lambda may be sinusoidally varied from 0.995 to 1.06.

The response of the secondary lambda probe to said periodical variation is measured and evaluated as mentioned above.

Turning again to Fig. 10a which illustrates a typical response of a well-functioning binary lambda probe to a variation as suggested in e.g. 12. As may be gleaned from Fig. 10a., the variation of lambda results in a variation of the response voltage of the probe. However, the response does not normally vary exactly as did the lambda - in the example it is illustrated how the response is somewhat smoother than the original periodical variation of lambda. This is because the probe per se will act as a filter e.g. a low pass filter of the lambda signal, even when well-functioning. It should be understood that even a well-functioning lambda probe has some response time, e.g. about 0.2-0.4 s for a binary probe as described above.

Fig. 10b illustrates a typical response of a faulty binary lambda probe. The response is in this case a rather smooth curve, where the variations are hardly or not discernible at all.

As mentioned above, and illustrated in Fig. 11, it is possible to determine a condition measure indicating how well the lambda probe is functioning by evaluating different well-functioning and faulty lambda probes. For example, the variation of the response may be evaluated to this end.

To perform a reliable diagnosis, it is preferred that the diagnosis process is run on several occasions, and that a mean is formed by the condition measures obtained on each occasion. When the mean exceeds a predetermined threshold value, a warning may be issued, e.g. by lighting of a malfunction indication lamp indicating a faulty secondary lambda probe.

It is most preferred that the diagnosis is run when the engine is idling. Preferably, several diagnoses may be run during a drive when the engine is idling on several occasions.

Further, it is possible to perform the diagnosis when the engine is not idling. However, the diagnosis should preferably be run when the engine runs in a low flow condition, such as during low speed and smooth driving. Accordingly, the exhaust gases created during the diagnosis may be readily taken care of.

An advantage with the proposed secondary lambda probe diagnosis method is that, since it is possible to perform the diagnosis when the engine is idling, the diagnosis may be made as end of line diagnosis during production of the vehide. Another advantage is that diagnostic data gathered during normal use of a vehicle may be stored so as to obtain data useful for evaluation of e.g. ageing of the lambda probes or to indicate tampering thereof.

Another advantage with the proposed method is that it enables diagnosis without risk of unconverted exhaust gases being discharged from the catalytic converter. During normal operating conditions of the engine, the first catalyst 4 converts essentially all of the exhaust gases from the engine 9, and the second catalyst 6 functions as a back-up in case the first catalyst 4 should not be able to convert all of the gases. When performing a diagnosis according to the invention, the first catalyst 4 should not convert all of the exhaust gases, since instead the periodical variation of lambda is intended to reach the secondary probe 5 for evaluation thereof. Instead, the second catalyst 6 may be used to convert the exhaust gases created during the diagnosis of the lambda probe.

The ability of the second catalyst 6 to convert gases depends upon its oxygen level and its previous oxygen exchange degree "oxygen exercise".
The oxygen level may be actively set after each longer fuel cut or fuel enrichment. Alternatively, the oxygen level of the second catalyst 6 may be controlled to move up or down in accordance with the response from the secondary lambda probe 5 or due to transients causing rich or lean spikes into second catalyst 6, which are likewise sensed by the secondary lambda probe 5. However, it is believed that active setting of the oxygen level in the second catalyst 6 will normally not be necessary for performing a diagnosis according to the invention.

The frequencies proposed above for the periodical variation of lambda enables the diagnosis to be performed in a relatively brief diagnosis duration time. Accordingly, even if during the diagnosis the lambda is generally varying on one side only of the "rich/lean" spectrum, the oxygen level in the second catalyst will enable full conversion of the exhaust gases created during the diagnosis, if necessary using active control of the oxygen level. Hence, the diagnosis method as proposed herein may be performed without increased discharge of non-converted exhaust gases.

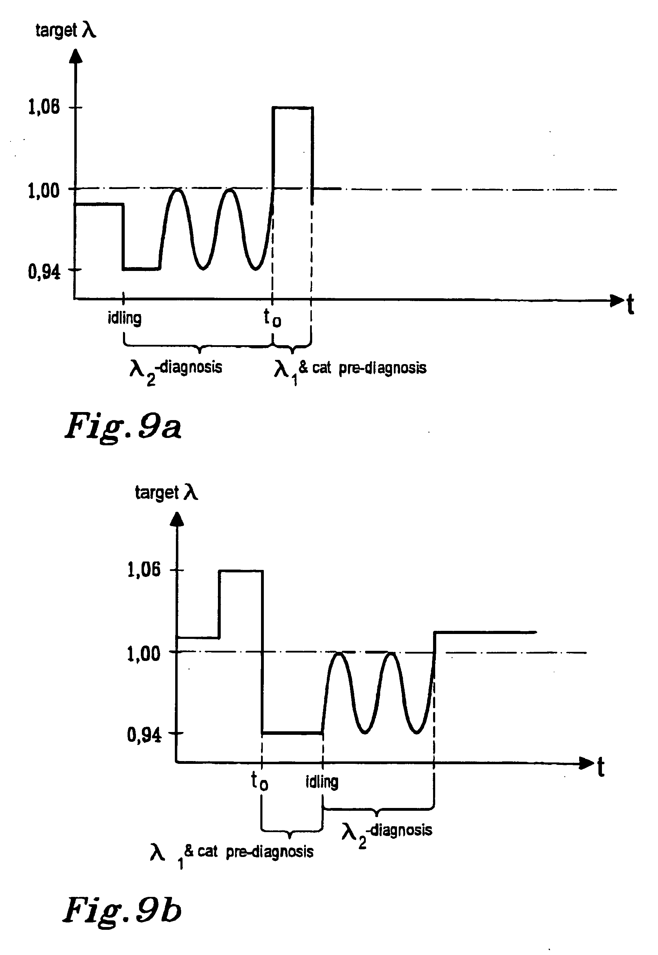

Figs 9a to 9d illustrate the variations in target lambda in different cases using a diagnosis method including the pre-diagnosis sequence, the secondary lambda probe diagnosis sequence and, when desired, the full primary lambda probe and catalyst diagnosis sequence as described above.

Fig. 9a illustrates schematically the variations in target lambda in a case where the secondary lambda probe is performed as a first diagnosis step as the engine is idling. In the illustrated case, the idling starts on the "rich" side of the lambda spectrum. During the secondary lambda probe diagnosis, the target lambda is set to vary sinusoidally, also on the rich side of the spectrum. Once the secondary lambda probe diagnosis is finished, the pre-diagnosis sequence of the primary lambda probe and the catalyst takes place. Thus the target lambda is altered from rich to lean (in this example from about 0.94 to 1.06). If necessary, a full diagnosis sequence may follow after the pre-diagnosis sequence as explained above. Also, if it is desired to log the pulse width from the pre-diagnosis sequence, the pre-diagnosis sequence may continue for a relatively longer period of time than as indicated in Fig. 9a, so as to finalize the measurement of the pulse width.

Fig. 9b illustrates a case where the pre-diagnosis sequence is performed before the secondary lambda probe diagnosis sequence. In this case, the idling starts on the "lean" side of the lambda. Hence, the alteration of target lambda necessary for the prediagnosing sequence will be from "lean" to "rich". Accordingly, the sinusoidal variation of target lambda may commence directly after the pre-diagnosis, and on the "rich" side of the spectrum. In the example of Fig. 9b, no full diagnosis sequence of the primary lambda probe and the catalyst is performed. Instead, the target lambda resumes a value for continued normal operation of the engine after the secondary lambda probe diagnosis sequence.

Although it is possible to perform the secondary lambda probe diagnosis on either side of the "rich"/"lean" side of the target lambda, it may be preferred to use one side only, and most preferred on the rich side. Thus, as illustrated by the examples of Fig. 9a and Fig. 9b, depending on which side that the idling starts, it may be determined whether it is suitable to start with the secondary lambda probe diagnosis immediately, or to start with the pre-diagnosis, thus causing a shift in target lambda so as to end up on the selected side of the lambda spectrum for the secondary lambda probe diagnosis.

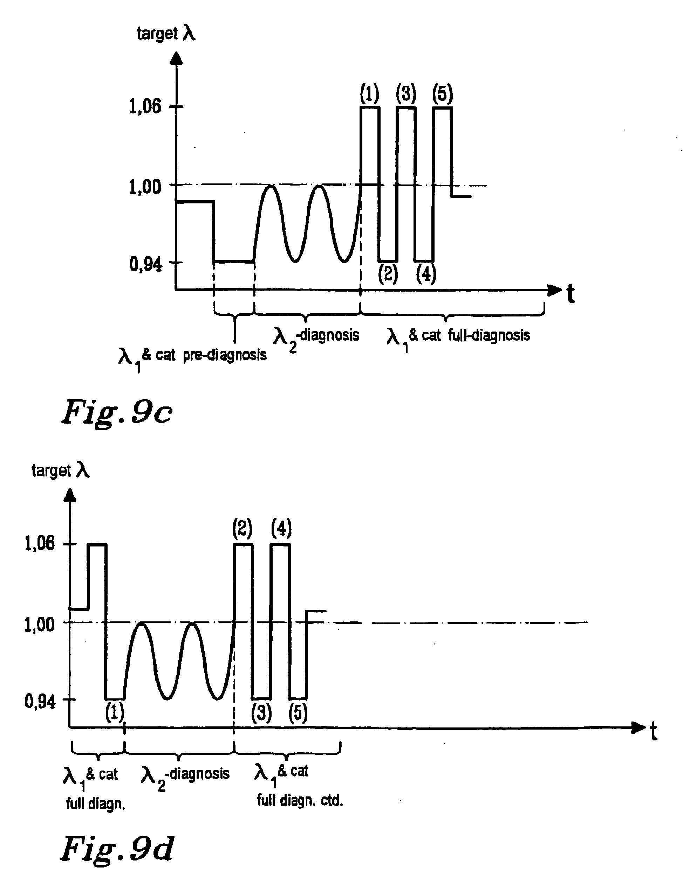

Fig. 9c illustrates a situation where the pre-diagnosis is followed by the secondary lambda probe diagnosis sequence as in Fig. 9b. In this case however, the secondary lambda probe diagnosis sequence is followed by a full primary lambda probe and catalyst diagnosis. It is seen how a number, in this case five, alterations of target lambda is performed, each alteration resulting in a delay time value and a pulse width value to be used for evaluation of the condition of the primary lambda probe and the catalyst.

Fig. 9d illustrates a situation where the secondary lambda probe diagnosis is performed intermittently in the full primary lambda probe and catalyst diagnosis. First, a first alteration of target lambda is performed, giving a first set of a delay time value and a pulse width value to be used in the full diagnosis. Thereafter, the sinusoidal variation of target lambda on the rich side of the spectrum is performed so as to achieve the secondary lambda probe diagnosis. After the secondary lambda probe diagnosis is finished, the full primary lambda probe and catalyst diagnosis sequence is resumed. Hence, four more alterations of target lambda are performed to complete the full diagnosis. Thus, it is understood that the test values achieved before and after the interruption made by the secondary lambda probe are all used in the full primary lambda probe and catalyst diagnosis. For simplicity, in Fig. 9d, no pre-diagnosis step is illustrated. In the example of Fig. 9d, the idling starts on the lean side of the lambda spectrum.

The diagnosis sequence and method as generally proposed herein presents an advantage in relation to prior techniques in that they require a relatively low calibration effort. In most prior techniques, catalyst and primary lambda probe diagnosis is performed individually and during smooth driving. In these set-ups, the calibration is individual, which causes the test values obtained in the diagnosis not to be comparable between different engine variants. Also, time-consuming calibration is required for each new engine variant to be launched. If a secondary lambda probe diagnosis were also to be added according to the prior techniques, this would require additional calibration time. When testing and demonstrating the function of an exhaust gas aftertreatment system, the time period of smooth driving is however limited. Accordingly, it may be difficult to find a suitable period of smooth driving during which the three individual diagnoses may be performed.

As generally proposed herein, the primary lambda probe diagnosis and the catalyst diagnosis are performed simultaneously. Advantageously, also a secondary lambda probe diagnosis may be performed together with the other two diagnoses. By diagnosing several components almost simultaneously and during idling as proposed herein, the calibration effort is limiting to setting the threshold for the test values, the pre-diagnosis thresholds, and determining the required number of test values for the mean calculations. Further, by using similar settings of the target lambda, the test values obtained will be comparable between different types of engines and components. Thus, the ageing of different components may be studied using long term follow up and tracking. Knowledge about the aging of the catalyst is further important for the calibration of lambda control algorithms, which in turn affect exhaust gas emissions during driving.

The duration of the diagnosis depends e.g. on the exhaust gas flow. The pulse width is in directly inverse proportion to the exhaust gas flow in g/s. The majority of engines today have an exhaust gas flow of between 3 and 6 g/s during idling. For accuracy of the test values, each pulse width may be normalized to the actual exhaust gas flow during metering thereof. The delay time is also dependent in inverse proportion to the exhaust gas flow, although to a lesser extent than the pulse width. Hence, also the delay time may be normalized to the present exhaust gas flow. The response from the secondary lambda probe to the sinus variation proposed in the secondary lambda probe diagnosis is however not dependent on the exhaust gas flow.

If it is desired to improve the accuracy of the diagnosis, the number of test values used to form a mean may advantageously be adjusted upwards. Such adjustments will either increase the duration of each diagnosis or require more values from previous diagnoses (driving cycles) to be stored in a memory.

The secondary lambda probe diagnosis should preferably only be performed once during each idling so as not to cause emission increase. Advantageously, a second, rear catalyst is provided downstream of the secondary lambda probe when secondary diagnosis is to be performed. The rear catalyst should then be able to convert the sinusoidal variations in the lambda downstream of the first catalyst which are performed to diagnose the secondary lambda probe. This conversion is enabled if the rear catalyst has been given "oxygen exercise", that is a minimum level of oxygen exchange during previous cycles. Further, the rear catalyst should have a minimum level of oxygen which can be releast for the conversion. The sinusoidal variation of lambda will consume about 25% of the full oxygen storage capacity in a full aged rear catalyst, if the rear catalyst conversion ability should be found to be too low at a certain idling, the secondary lambda diagnosis may be cancelled. Although advantageously used together with the primary lambda probe and catalyst diagnosis sequence, it is understood that the secondary diagnosis sequence may be used separately without diagnosis of the other components, or using other diagnosis methods for the other components.

As will be understood by a person skilled in the art, a number of variants and embodiments are possible within the scope of the present invention.

## Claims

1. Method for diagnosing an exhaust aftertreatment system comprising at least one catalyst (4) and a primary lambda probe (3) mounted upstream of the catalyst (4), including a diagnosis sequence (500) for simultaneously diagnosing the primary lambda probe (3) and the catalyst (4), said diagnosis sequence (500) comprising
- controlling (500) the target lambda (air to fuel ratio) upstream of the first catalyst so as to alter between a rich and lean value, respectively, at a target time (t₀)
- measuring a primary lambda probe delay time (t_{delay}) being the time from the target time (t₀) to the time (t resp λ₁) at which the alteration of the target lambda is detected by the primary lambda probe, and,
- measuring a catalyst pulse width time (t_{pulse width}) being the time from the target time (t₀) to the time (t resp λ₂) at which the alteration of the target lambda results in an alteration of the lambda detected downstream of the catalyst,
- evaluating the condition of the primary lambda probe (3) using said delay time (t_{delay}) and
- evaluating the condition of the catalyst (4) using said catalyst pulse width time (t_{pulse width}).

2. Method according to claim 1, comprising,
- performing a predetermined number of alterations of target lambda so as to obtain a predetermined number of delay times (t_{delay}) and pulse width times (t_{pulse width}) for evaluation of the condition of the primary lambda probe (3) and/or the catalyst (4).

3. Method according to claim 2, comprising forming a mean value of said predetermined number of delay times (t_{delay}) and pulse width times (t_{pulse width}), and comparing said mean value to a predetermined threshold delay time and pulse width time for determining the condition of the first lambda probe (3) and catalyst (4).

4. Method according to any one of the preceding claims, wherein the system comprises a secondary lambda probe (5) being arranged downstream of the catalyst (4), and said catalyst pulse width time (t_{pulse width}) is measured as the time from said target time (t₀) to the time at which the alteration of the lambda results in an alteration of the lambda detected by the secondary lambda probe (5).

5. Method according to any one of the previous claims, further including a pre-diagnosis sequence for pre-diagnosis of the primary lambda probe (3) and the catalyst (4) comprising
- controlling the target lambda (air to fuel ratio) upstream of the catalyst (4) so as to alter between a rich and lean state, respectively, at a target time (t₀)
- measuring a primary lambda probe delay time (t_{delay}) being the time from said target time (t₀) to the time t(response lambda1) at which the alteration of the lambda is detected by the primary lambda probe
- comparing the measured delay time (t_{delay}) with a pre-diagnosis threshold delay time
- if the measured delay time (t_{delay}) is less then the pre-diagnosis threshold delay time, classifying the primary lambda probe (3) as well-functioning; and
- measuring a catalyst pulse width time (t_{pulse widlh}) being the time from said target time (to)to the time t(response lambda2) at which the alteration of the target lambda results in a alteration of the lambda detected downstream of the catalyst during a pre-diagnosis threshold pulse width time,
- if said pre-diagnosis threshold pulse width time is expired before an alteration of the lambda downstream of the catalyst is detected, classifying the catalyst (4) as well-functioning;
- based on the classification of the primary lambda probe and catalyst, determining whether or not to perform a diagnosis sequence for the primary lambda probe (3) and/or the catalyst (4).

6. Method according to claim 5, wherein,
- if the primary lambda probe and catalyst pre-diagnosis sequence results in both the primary lambda probe (3) and the catalyst (4) being classified as well-functioning, no further diagnosis is performed (200D);
- if the primary lambda probe(3) is classified as well-functioning, and the catalyst (4) is not classified as well-functioning, a diagnosis sequence is performed for the catalyst (4) (200B);
- if the primary lambda probe (3) is not classified as well-functioning, and the catalyst (4) is classified as well-functioning, a diagnosis sequence is performed for the primary lambda probe (3) (200C);
- if the primary lambda probe (3) is not classified as well-functioning, and the catalyst (4)is not classified as well-functioning, a diagnosis sequence is performed for the primary lambda probe (3) and the catalyst (4) (200A).

7. Method according to claim 6, wherein, if the diagnosis sequence is performed for the primary lambda probe only (200C), the alterations in target lambda are controlled independently of any response detected downstream of the catalyst, using the response from the primary lambda probe (3) (400).

8. Method according to claim 6, wherein, if the diagnosis sequence is performed for the catalyst only, the alterations in the target lambda are controlled using the response detected downstream of the catalyst (300).

9. Method according to claim 6, wherein, if the diagnosis sequence is performed for the catalyst and the primary lambda probe, the alterations in the target lambda are controlled using of the response detected by the primary lambda probe and the response detected downstream of the catalyst (250).

10. Method according to any one of the preceding claims, wherein the system further comprises a secondary lambda probe being arranged downstream of the first catalyst, and a diagnosis sequence for diagnosing the secondary lambda probe is performed before, after or interrupting the primary lambda probe and first catalyst diagnosing sequence.

11. Method according to claim 10, wherein the secondary lambda probe diagnosis sequence comprises, when the catalyst is essentially oxidized or alternatively essentially deoxidized,
- controlling the target lambda upstream of the catalyst so as to vary the lambda periodically at least partly in a nominal dynamic range of the secondary lambda probe,
- measuring the response of the secondary lambda probe to said periodical variation, and
- determining a condition measure of the secondary lambda probe using said response.

12. Method according to any one of the preceding claims, wherein the method is performed during idling.

13. Method according to any one of the preceding claims, wherein the alterations of target lambda are in the range 0.09 - 1.10, preferably 0.94 - 1.06.

## Patentansprüche

1. Ein Verfahren zur Diagnose eines Abgasnachbehandlungssystems, umfassend mindestens einen Katalysator (4) und eine primäre Lambdasonde (3), die in Durchströmungsrichtung vor dem Katalysator (4) montiert ist, das eine Diagnosesequenz (500) zur gleichzeitigen Diagnose der primären Lambdasonde (3) und des Katalysators (4) einschließt, wobei die Diagnosesequenz (500) folgendes umfasst:
- Steuern (500) des Ziel-Lambda (Luft-zu-Kraftstoff-Verhältnis) in Durchströmungsrichtung vor dem ersten Katalysator, um zu einer Zielzeit (t₀) jeweils zwischen einem fetten und einem mageren Wert zu wechseln,
- Messen einer Verzögerungszeit (t_{delay}) der primären Lambdasonde (3), welche die Zeit von der Zielzeit (t₀) bis zu der Zeit (t resp λ₁) ist, in der die Änderung des Lambda-Zielwertes durch die primäre Lambdasonde erkannt wird, und
- Messen einer Impulsbreitenzeit (t_{pulse width}) des Katalysators, welche die Zeit von der Zielzeit (t₀) bis zu der Zeit (t resp λ₂) ist, in der die Änderung des Lambda-Zielwertes zu einer Änderung des Lambdawertes führt, der in Durchströmungsrichtung nach dem Katalysator festgestellt wird,
- Auswerten des Zustandes der primären Lambdasonde (3) unter Nutzung der Verzögerungszeit (t_{delay}), und
- Auswerten des Zustandes des Katalysators (4) unter Nutzung der Impulsbreitenzeit (t_{pulse width}) des Katalysators.

2. Verfahren nach Anspruch 1, umfassend
- Ausführen einer vorbestimmten Anzahl von Lambda-Zielwert-Änderungen, um so eine vorbestimmte Anzahl von Verzögerungszeiten (t_{delay}) und Impulsbreitenzeiten (t_{pulse width}) zur Auswertung des Zustandes der primären Lambdasonde (3) und / oder des Katalysators (4) zu erhalten.

3. Verfahren nach Anspruch 2, umfassend das Bilden eines Mittelwertes der vorbestimmten Anzahl von Verzögerungszeiten (t_{delay}) und Impulsbreitenzeiten (t_{pulse width}) und Vergleichen des Mittelwertes mit einer vorbestimmten Schwellenverzögerungszeit und -impulsbreitenzeit zur Bestimmung des Zustandes der primären Lambdasonde (3) und des Katalysators (4).

4. Verfahren nach einem der vorangehenden Ansprüche, worin das System eine sekundäre Lambdasonde (5) umfasst, die in Durchströmungsrichtung nach dem Katalysator (4) angebracht ist, und die Impulsbreitenzeit (t_{pulse width}) des Katalysators als die Zeit von der Zielzeit (t₀) bis zu der Zeit gemessen wird, in der die Änderung des Lambda-Zielwertes zu einer Änderung des Lambdawertes führt, der von der sekundären Lambdasonde (5) festgestellt wird.

5. Verfahren nach einem der vorangehenden Ansprüche, des weiteren umfassend eine Vordiagnose-Sequenz zur Vordiagnose der primären Lambdasonde (3) und des Katalysators (4), umfassend
- Steuern (500) des Ziel-Lambda (Luft-zu-Kraftstoff-Verhältnis) in Durchströmungsrichtung vor dem Katalysator (4), um zu einer Zielzeit (t₀) jeweils zwischen einem fetten und einem mageren Zustand zu wechseln
- Messen einer Verzögerungszeit (t_{delay}) der primären Lambdasonde, welche die Zeit von der Zielzeit (t₀) bis zu der Zeit t (response lambda1) ist, zu der die Änderung des Lambda-Zielwertes durch die primäre Lambdasonde erkannt wird
- Vergleichen der gemessenen Verzögerungszeit (t_{delay}) mit einer Vordiagnose- Schwellenverzögerungszeit,
- Einstufen der primären Lambdasonde (3) als gut funktionierend, falls die gemessene Verzögerungszeit (t_{delay}) geringer ist als die Vordiagnose- Schwellenverzögerungszeit ist, und
- Messen einer Impulsbreitenzeit (t_{pulse width}) des Katalysators, welche die Zeit von der Zielzeit (t₀) bis zu der Zeit t (response lambda2) ist, zu der die Änderung des Lambda-Zielwertes zu einer Änderung des Lambdawertes führt, der in Durchströmungsrichtung nach dem Katalysator während einer Vordiagnose - Schwellenimpulsbreitenzeit festgestellt wird,
- Einstufen des Katalysators (4) als gut funktionierend, falls die Vordiagnose- Schwellenimpulsbreitenzeit abgelaufen ist, bevor es zu einer Änderung des Lambdawertes kommt, der in Durchströmungsrichtung nach dem Katalysator festgestellt wird,
- basierend auf der Einstufung der primären Lambdasonde und des Katalysators Bestimmen, ob eine Diagnosesequenz der primären Lambdasonde (3) und / oder des Katalysators (4) durchgeführt werden soll oder nicht.

6. Verfahren nach Anspruch 5, worin
- keine weiteren Diagnosen (200D) durchgeführt werden, falls die Vordiagnose-Sequenz der primären Lambdasonde und des Katalysators dazu führt, dass sowohl die primäre Lambdasonde (3) als auch der Katalysator (4) als gut funktionierend eingestuft werden,
- eine Diagnosesequenz (200B) für den Katalysator (4) durchgeführt wird, falls die primäre Lambdasonde (3) als gut funktionierend eingestuft wird und der Katalysator (4) nicht als gut funktionierend eingestuft wird,
- eine Diagnosesequenz (200C) für die primäre Lambdasonde (3) durchgeführt wird, falls die primäre Lambdasonde (3) nicht als gut funktionierend eingestuft wird und der Katalysator (4) als gut funktionierend eingestuft wird,
- eine Diagnosesequenz (200A) für die primäre Lambdasonde (3) und den Katalysator (4) durchgeführt wird, falls die primäre Lambdasonde (3) nicht als gut funktionierend eingestuft wird und der Katalysator (4) nicht als gut funktionierend eingestuft wird.

7. Verfahren nach Anspruch 6, worin, wenn die Diagnosesequenz (200C) nur für die primäre Lambdasonde (3) durchgeführt wird, die Änderungen des Lambda-Zielwertes unabhängig von einer in Durchströmungsrichtung nach dem Katalysator festgestellten Rückmeldung gesteuert werden, indem die Rückmeldung von der primären Lambdasonde (3) (400) genutzt wird.

8. Verfahren nach Anspruch 6, worin, wenn die Diagnosesequenz nur für den Katalysator durchgeführt wird, die Änderungen des Lambda-Zielwertes gesteuert werden, indem die in Durchströmungsrichtung nach dem Katalysator festgestellte Rückmeldung (300) genutzt wird.

9. Verfahren nach Anspruch 6, worin, wenn die Diagnosesequenz für den Katalysator und die primäre Lambdasonde durchgeführt wird, die Änderungen des Lambda-Zielwertes gesteuert werden, indem die von der primären Lambdasonde festgestellte Rückmeldung und die in Durchströmungsrichtung nach dem Katalysator festgestellte Rückmeldung (250) genutzt wird.

10. Verfahren nach einem der vorangehenden Ansprüche, worin das System des weiteren eine sekundäre Lambdasonde umfasst, die in Durchströmungsrichtung nach dem ersten Katalysator angebracht ist, und eine Diagnosesequenz zum Diagnostizieren der sekundären Lambdasonde, vor, nach oder in Unterbrechung der Diagnosesequenz für die primäre Lambdasonde und den ersten Katalysator durchgeführt wird.

11. Verfahren nach Anspruch 10, worin, wenn der Katalysator im wesentlichen oxidiert oder wahlweise im wesentlichen desoxidiert ist, die Diagnosesequenz für die sekundäre Lambdasonde folgendes umfasst:
- Steuern des Ziel-Lambda in Durchströmungsrichtung vor dem Katalysator, um so den Lambdawert periodisch zumindest teilweise in einem nominellen dynamischen Bereich der sekundären Lambdasonde zu variieren
- Messen der Rückmeldung von der sekundären Lambdasonde auf die periodische Variierung, und
- Bestimmen einer Zustandsmaßnahme der sekundären Lambdasonde unter Nutzung dieser Rückmeldung.

12. Verfahren nach einem der vorangehenden Ansprüche, worin das Verfahren im Leerlauf durchgeführt wird.

13. Verfahren nach einem der vorangehenden Ansprüche, worin die Änderungen des Lambda-Zielwertes in einem Bereich von 0,09 bis 1,10, vorzugsweise 0,94 bis 1,06 liegen.

## Revendications

1. Procédé de diagnostic d'un système de post-traitement d'un échappement comprenant au moins un catalyseur (4) et une sonde lambda primaire (3) montée en amont du catalyseur (4), comprenant une séquence de diagnostic (500) pour réaliser simultanément le diagnostic de la sonde lambda primaire (3) et du catalyseur (4), ladite séquence de diagnostic (500) comprenant les étapes consistant à :
- contrôler (500) le lambda cible (rapport air/carburant) en amont du premier catalyseur de manière à passer respectivement d'une valeur de mode riche à une valeur de mode pauvre, à un temps cible (t₀)
- mesurer un temps de retard (t_{delay}) de la sonde lambda primaire qui est la durée entre le temps cible (t₀) et le temps (t resp λ₁) auquel le changement du lambda cible est détecté par la sonde lambda primaire, et
- mesurer une durée d'impulsion du catalyseur (t_{pulse width}) qui est la durée entre le temps cible (t₀) et le temps (t resp λ₂) auquel le changement du lambda cible a pour résultat un changement du lambda détecté en aval du catalyseur,
- évaluer l'état de la sonde lambda primaire (3) en utilisant ledit temps de retard (t_{delay}) et,
- évaluer l'état du catalyseur (4) en utilisant ladite durée d'impulsion du catalyseur (t_{pulse width}).

2. Procédé selon la revendication 1, comprenant l'étape consistant à :
- effectuer un nombre prédéterminé de changements du lambda cible afin d'obtenir un nombre prédéterminé de temps de retard (t_{delay}) et de durées d'impulsion (t_{pulse width}) pour évaluer l'état de la sonde lambda primaire (3) et/ou du catalyseur (4).

3. Procédé selon la revendication 2, comprenant l'étape consistant à établir une valeur moyenne dudit nombre prédéterminé de temps de retard (t_{delay}) et de durées d'impulsion (t_{pulse width}), et à comparer ladite valeur moyenne à un temps de retard et à une durée d'impulsion seuils prédéterminés pour déterminer l'état de la première sonde lambda (3) et du catalyseur (4).

4. Procédé selon l'une quelconque des revendications précédentes, dans lequel le système comprend une sonde lambda secondaire (5) qui est placée en aval du catalyseur (4), et ladite durée d'impulsion du catalyseur (t_{pulse width}) est mesurée comme étant la durée entre ledit temps cible (t₀) et le temps auquel le changement du lambda a pour résultat un changement du lambda détecté par la sonde lambda secondaire (5).

5. Procédé selon l'une quelconque des revendications précédentes, comprenant en outre une séquence de pré-diagnostic pour faire le pré-diagnostic de la sonde lambda primaire (3) et du catalyseur (4), comprenant les étapes consistant à :
- contrôler le lambda cible (rapport air/carburant) en amont du catalyseur (4) de manière à passer respectivement d'une valeur de mode riche à une valeur de mode pauvre, à un temps cible (t₀)
- mesurer un temps de retard (t_{delay}) de la sonde lambda primaire qui est la durée entre le temps cible (t₀) et le temps (t response λ₁) auquel le changement du lambda est détecté par la sonde lambda primaire,
- comparer le temps de retard mesuré (t_{delay}) à un temps de retard seuil prédéterminé,
- si le temps de retard mesuré (t_{delay}) est inférieur au temps de retard seuil du pré-diagnostic, classer la sonde lambda primaire (3) comme fonctionnant bien ; et
- mesurer une durée d'impulsion du catalyseur (t_{pulse width}) qui est la durée entre le temps cible (t₀) et le temps t(response λ₂) auquel le changement du lambda cible a pour résultat un changement du lambda détecté en aval du catalyseur pendant une durée d'impulsion seuil du pré-diagnostic,
- si ladite durée d'impulsion seuil du pré-diagnostic est expirée avant qu'un changement du lambda en aval du catalyseur soit détecté, classer le catalyseur (4) comme fonctionnant bien ;
- sur la base du classement de la sonde lambda primaire et du catalyseur, déterminer s'il faut ou non effectuer une séquence de diagnostic pour la sonde lambda primaire (3) et/ou le catalyseur (4).

6. Procédé selon la revendication 5, dans lequel,
- si la séquence de pré-diagnostic de la sonde lambda primaire et du catalyseur a pour résultat le double classement de la sonde lambda primaire (3) et du catalyseur (4) comme fonctionnant bien, aucun autre diagnostic n'est effectué (200D) ;
- si la sonde lambda primaire (3) est classée comme fonctionnant bien et si le catalyseur (4) n'est pas classé comme fonctionnant bien, une séquence de diagnostic est effectuée pour le catalyseur (4) (200B) ;
- si la sonde lambda primaire (3) n'est pas classée comme fonctionnant bien et si le catalyseur (4) est classé comme fonctionnant bien, une séquence de diagnostic est effectuée pour la sonde lambda primaire (3) (200C) ;
- si la sonde lambda primaire (3) n'est pas classée comme fonctionnant bien et si le catalyseur (4) n'est pas classé comme fonctionnant bien, une séquence de diagnostic est effectuée pour la sonde lambda primaire (3) et pour le catalyseur (4) (200A).

7. Procédé selon la revendication 6, dans lequel, si la séquence de diagnostic n'est effectuée que pour la sonde lambda primaire (200C), les changements du lambda cible sont contrôlés indépendamment de toute réponse détectée en aval du catalyseur, en utilisant la réponse de la sonde lambda primaire (3) (400).

8. Procédé selon la revendication 6, dans lequel, si la séquence de diagnostic n'est effectuée que pour le catalyseur, les changements du lambda cible sont contrôlés en utilisant la réponse détectée en aval du catalyseur (300).

9. Procédé selon la revendication 6, dans lequel, si la séquence de diagnostic est effectuée pour le catalyseur et pour la sonde lambda primaire, les changements du lambda cible sont contrôlés en utilisant la réponse détectée par la sonde lambda primaire et la réponse détectée en aval du catalyseur (250).

10. Procédé selon l'une quelconque des revendications précédentes, dans lequel le système comprend en outre une sonde lambda secondaire qui est placée en aval du premier catalyseur, et une séquence de diagnostic pour faire le diagnostic de la sonde lambda secondaire est réalisée avant, après ou interrompant la séquence de diagnostic de la sonde lambda primaire et du premier catalyseur.

11. Procédé selon la revendication 10, dans lequel la séquence de diagnostic de la sonde lambda secondaire comprend, lorsque le catalyseur est essentiellement oxydé ou bien essentiellement désoxydé :
- le contrôle du lambda cible en amont du catalyseur afin de faire varier périodiquement la valeur lambda, au moins en partie, dans une plage dynamique nominale de la sonde lambda secondaire,
- la mesure de la réponse de la sonde lambda secondaire à ladite variation périodique, et
- la détermination d'une mesure de l'état de la sonde lambda secondaire en utilisant ladite réponse.

12. Procédé selon l'une quelconque des revendications précédentes, dans lequel le procédé est effectué pendant un régime de ralenti.

13. Procédé selon l'une quelconque des revendications précédentes, dans lequel les changements du lambda cible sont compris dans la plage 0,09 - 1,10, de manière préférée 0,94-1,06.
